# EUROPEAN PATENT APPLICATION

(11) **EP 2 584 514 A1**
(43) Date of publication of application: **24.04.2013**
(21) Application number: 12185125.7
(22) Date of filing: 20.09.2012
(51) Int. Cl.: G06Q 20/32

(54) **Cloud credit card transaction system and transaction method thereof**

(30) Priority: 21.10.2011 TW 100138383
(71) Applicant: GCCA Inc., Tortola (VG)
(72) Inventor: Szu, Oliver, Zhongshan Dist. Taipei City 104 (TW); Pan, Peter, Xindian Dist. New Taipei City 231 (TW)
(74) Representative: Zaboliene, Reda

(57) **Abstract**

A cloud credit card transaction system (100) and the transaction method thereof are disclosed. The system (100) comprises a client terminal (120), a cloud credit card service system (110) and at least one shop (130). The client terminal (120) includes a wireless communication device (120), and the cloud credit card service system (110) has a cloud credit card transaction module (1133). The transaction method of the present invention comprises that the cloud credit card service system (110) is connected to the wireless communication device (120) with wireless and employs the cloud credit card transaction module (1133) for authentication of the transaction between the client terminal (120) and the shop (130). The shop (130) is connected to the cloud credit card service system (110), and the client terminal (120) can be coupled to the cloud credit card transaction module (1133) to transact with the shop by the wireless communication device (120).

## Description

### BACKGROUND

### Field of Invention

The present invention relates to a credit card transaction system and the transaction method thereof. More particularly, the present invention relates to utilizing cloud concepts to construct a cloud credit card transaction system, and transact with a shop with a cloud credit card via a cloud credit card transaction module.

### Description of Related Art

In recent, a great number of banks continuously offer various credit card services for their consumers, and users can go to a shop which signs a contract with an issuing bank or an acquiring bank and use the credit cards to transact with the shop without bringing with plenty of cash. After the issuing bank or acquiring bank confirms this transaction, they will pay the associated money to the shop, then make a list including the transaction of the users by mouth basis and send the list to these users and require the money. This kinds of credit cards transaction system is utilized widely because this system bring all of the issuing banks, the acquiring banks, the shops and the users more convenient, and make the list of account thereof more clearly.

However, although the credit cards bring with convenient to these users, several risks still exist. For example, these credit cards could be pirated or copied under illegal-means or these credit cards could be stolen causing the loss of the users. Otherwise, if a user losses his credit card carelessly, he should be requested to process a very complicated procedures to register loss of this credit card. Moreover, the user's credit card would be used on illegal way during these procedures and make the user losing a lot of money. Therefore, how to make usage of the credit card more safety is an important issue for every bank.

On the other aspects, the distributions of mobile devices are increased sharply in the recent years. Everyone in the world is almost with at least one mobile device nowadays. Thus, an idea about the transaction via the mobile devices is appeared, for example, some telecommunication companies provide their users for small transactions via a mobile phone. In this case, the lists and information of those transactions will be added into the bill of users' account in the telecommunication companies. However, in this case, only few shops could be transacted via this way and only few amount of transaction could be accepted. Moreover, the safety about the transmitting way of the transaction via the telecommunication is not completed so that this kind of way for transaction could not be accepted widespread.

At this moment, the safety of transactions whether via credit cards or via mobile devices both have defects. Thus, users will feel worry about these kinds of transaction when they would like to shop.

In some prior arts, which is adopted a physical credit card chip combining to a mobile device. This method still has defects, for example, the mobile device could not be combined with many credit cards. Thus, in this method, it has no extensibility in practical. Moreover, this method uses some short-distance communication techniques, such as NFC, however, these techniques will cause the complexity and cost of the mobile device is raised and even increasing the power consumption.

### SUMMARY

One object of the present invention is to provide a cloud credit card transaction module for providing a credit card transaction system and the transaction method thereof.

Another object of the present invention is to solve some problems in prior art, for example, physical credit cards are copied on illegal-means or are stolen and used on illegal-means.

Still another object of the present invention is to provide transaction functions of cloud credit cards via mobile devices, such as a wireless communication device. Thus, users may transact directly via the wireless communication device which may omit the plenty of physical credit cards for improving the convenience.

In order to reach the foregoing objects, the present invention provides a cloud credit card transaction method and the system thereof. The cloud credit card transaction system comprises a client terminal including a wireless communication device, a cloud credit card service system and at least one shop. The cloud credit card service system could be connected to the wireless communication device by a wireless connection, and provides a cloud credit card transaction module to facilitate the client terminal to authorize at least one cloud credit card. The shop could be connected to the cloud credit cared service system, and the client terminal could be transact with the shop by the cloud credit card via the cloud credit card transaction module of the cloud credit card service system and the wireless communication device.

In an embodiment of the present invention, the cloud credit card transaction system further comprises: an acquiring bank and an issuing bank. The acquiring bank connects to the shop and the cloud credit card service system for confirming this transaction. The issuing bank connects to the acquiring bank, and pay to the shop after the acquiring bank confirming the transaction.

The cloud credit card is constructed to be based on public key infrastructure (PKI). Moreover, the wireless communication device and the cloud credit card service system could construct a safe and private connection for transmitting, such as secure socket layer (SSL). Furthermore, the transmission between the shop, the acquiring bank and the issuing bank could be via secure electronic transaction (SET). Therefore, the safety of the transaction according to the present invention should be sure.

Further, in certain embodiments of the present invention, the wireless communication device comprises a storage unit for storing authorizing information of the cloud credit card. In another certain embodiments of the present invention, the cloud credit service system comprises a storage module for storing authorizing information of the cloud credit card, and the cloud credit service system provides a user interface for user managing. Thus, the client terminal could use the wireless communication device to connect to the user interface then transact via the cloud credit card transaction module.

In addition, the present invention further provides a cloud credit card transaction method, the step of the method comprises: initially, a wireless communication device is connected to a cloud credit card service system, and the cloud credit card service system comprises a cloud credit card transaction module for generating a user interface displayed on the wireless communication device. Subsequently, transaction information with a shop is entered into the cloud credit card service system by the user interface, and a cloud credit card is selected to transact via the cloud credit card transaction module. Finally, this transaction is authorized by the cloud credit card transaction module.

In certain embodiments of the present invention, the cloud credit card transaction method further comprises the steps as following: the cloud credit card service system reports the transaction information to the shop; and the transaction is transmitted to an acquiring bank and an issuing bank via secure electronic transaction (SET). In another certain embodiments of the present invention, the cloud credit card transaction method further comprises the steps as following: the cloud credit card service system reports the transaction results to the shop; and the cloud credit card service system reports the transaction results to the client terminal.

Furthermore, in an embodiment of the present invention, the cloud credit card transaction method further comprises the steps as following: the wireless communication device comprises a signal transmitting unit for scanning a position of the wireless communication device; and the cloud credit card service system receives the position and transmits information of at least one shop to the wireless communication device.

In certain embodiments of the present invention, the cloud credit card transaction method comprises the steps as following: the issuing bank pays to the cloud credit card service system after confirming this transaction; the cloud credit card service system pays to the acquiring bank and the acquiring bank pays to the shop; finally, the issuing bank lists bill of the user's account by month basis and charges to the user. In another certain embodiments of the present invention, the cloud credit card transaction method comprises the steps as following: the cloud credit card service system is involved in the server items of the acquiring bank. In this case, the issuing bank pays to the acquiring bank after confirming this transaction, and the acquiring bank pays to the shop. Finally, the issuing bank charge to the user via listing bill of the user's account by monthly.

As mentioned-above, users will not need to bring with physical credit cards and transact with shops by cloud credit cards via a mobile device according to a cloud credit card transaction system and the transaction method of the present invention. In addition, the transaction processes without any more actions of the shop, and the user could be transacted by the cloud credit card service system via wireless connection. Thus, the user's credit card do not need to contact other people making the user more trust this kinds way of transaction via credit cards. Furthermore, users will not need to worry about the loss of credit cards or illegal use of credit cards due to no more physical credit cards existing.

### BRIEF DESCRIPTION OF THE DRAWINGS

The present description will be better understood from the following detailed description read in light of the accompanying drawings, wherein:

FIG. 1 illustrates a schematic diagram illustrating an embodiment of a cloud credit card transaction system according to the present invention;

FIG. 2 illustrates a schematic diagram illustrating an embodiment of a cloud credit card service system according to the present invention;

FIG. 3 illustrates a schematic diagram illustrating an embodiment of a wireless communication device according to the present invention;

FIG. 4 illustrates a flow chart of an embodiment of a cloud credit card transaction system according to the present invention;

FIG. 5 illustrates a flow chart of an embodiment of a cloud credit card transaction system combining with scanning-position service according to the present invention;

FIG. 6 illustrates a schematic diagram illustrating another embodiment of a cloud credit card transaction system according to the present invention;

FIGS. 7A∼7B illustrate flow charts of another embodiment of a cloud credit card transaction system according to the present invention; and

FIG. 8 illustrates a schematic diagram illustrating still another embodiment of a cloud credit card transaction system according to the present invention.

### DETAILED DESCRIPTION

The following description includes discussion of figures having illustrations given by way of example of implementations of embodiments of the invention. The drawings should be understood by way of example, and not by way of limitation. As used herein, references to one or more "embodiments" are to be understood as describing a particular feature, structure, or characteristic included in at least one implementation of the invention. Thus, phrases such as "in one embodiment" or "in an alternate embodiment" appearing herein describe various embodiments and implementations of the invention, and do not necessarily all refer to the same embodiment. However, they are also not necessarily mutually exclusive.

Descriptions of certain details and implementations follow, including a description of the figures, which may depict some or all of the embodiments described below, as well as discussing other potential embodiments or implementations of the inventive concepts presented herein. An overview of embodiments of the invention is provided below, followed by a more detailed description with reference to the drawings.

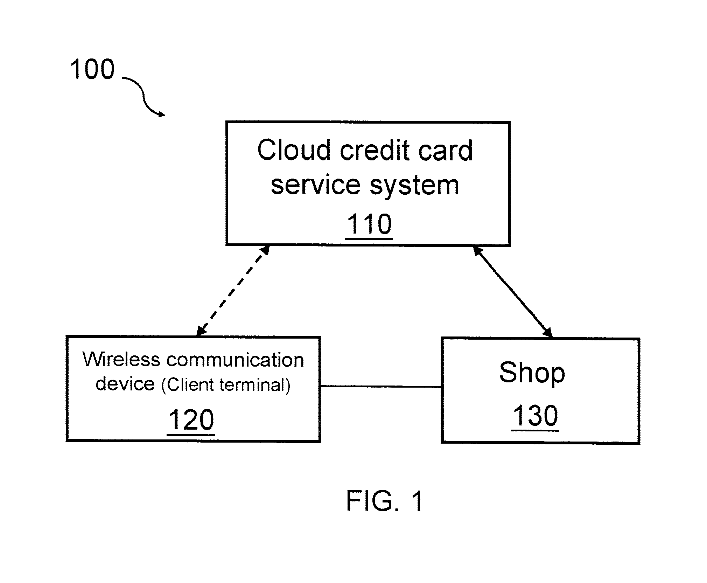

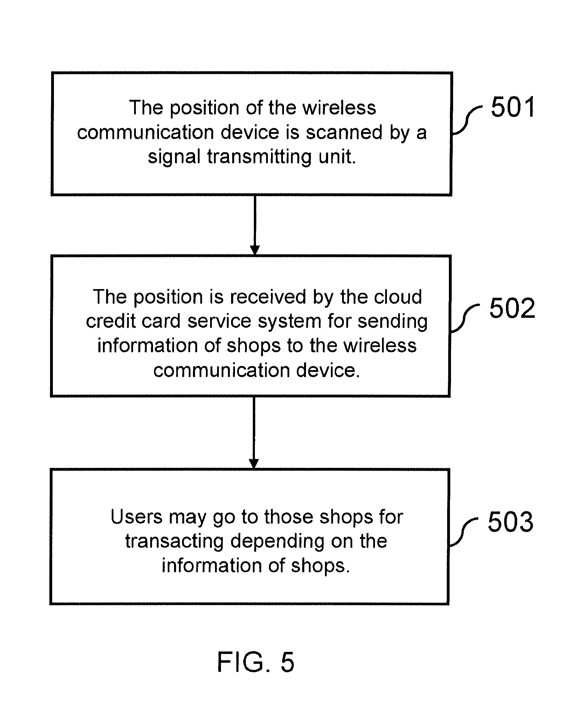

Regarding to FIG. 1, it illustrates a schematic diagram illustrating an embodiment of a cloud credit card transaction system according to the present invention. A cloud credit card transaction system 100 comprises a wireless communication device of a client terminal 120, a cloud credit card service system 110 and at least one shop 130. Moreover, the cloud credit ca rd transaction system 100 may comprises an acquiring bank and an issuing bank (shown as FIG. 5). The cloud credit card service system 110 (or named as a cloud credit card service provider), for example, may be constructed to a remote terminal computing system which comprises a service system, and communicate with a wireless communication device of a client terminal 120, a shop 130 and an issuing bank even an acquiring bank via wireless or wired connection. In this embodiment, the wireless communication device 120 represents a client terminal, and a user may connects the cloud credit card service system 110 and shop 130 by the wireless communication 120. Moreover, the issuing bank here is similar to a traditional issuing bank, and the issuing bank not only issue physical credit cards for users but also cloud credit cards for user depending on the user's option. The shop 130 represents a merchant or a shop which contracts with the banks for accepting the transaction of credit cards, and is similar to a traditional shop. The difference is the shop further accepts a user make a transaction by a cloud credit card via the cloud credit card service system 110. The cloud credit card issued from the issuing bank could be stored in the wireless communication device 120 of the client terminal or in the cloud credit card service system 110.

In certain embodiments of the present invention, the wireless communication device 120 may comprise any electrical devices having a function of communication via wireless connection, such as cellular phones, smart phones, personal digital assistant (PDA), laptop or tablet personal computer etc., but it isn't limited in these.

Thus, when a user goes to a shop 130 for transaction, he will connect to the cloud credit card service system 110 via wireless or wired connections by the wireless communication device 120. In this embodiment, the wireless connection may comprises any kinds of wireless connections, such as IEEE 802.11x, 3G, 3.5G or Wi-Fi, but it isn't limited in these. After the user (or the client terminal) connects to the cloud credit card service system 110 by the wireless communication device 120, he may enter transaction information of the shop 130 into the cloud credit card service system 110.

The shop 130 may comprise one or more shops, and these shops make contract with the cloud credit card service system 110 (which may be involved in the acquiring bank), and agree with the client terminal to transact via cloud credit card by the wireless communication device 120 wirelessly connected to the cloud credit card service system 110. Alternately, in another embodiment, the cloud credit card service system 110 and the acquiring bank may make contract with the shop 130 commonly for offering cloud credit cards' service, and the corresponding contents will introduce in following.

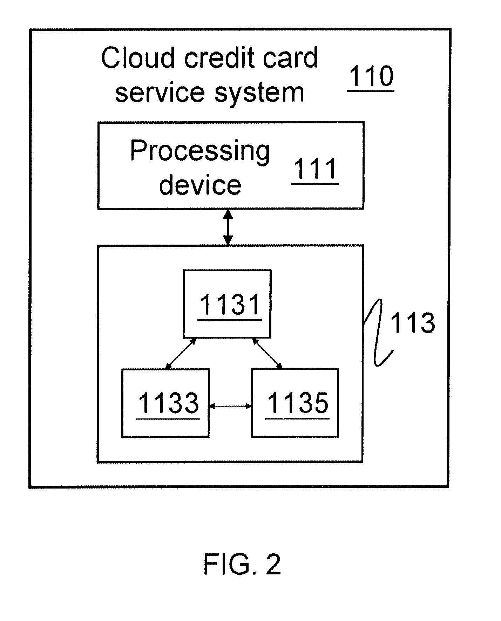

Subsequently, referring to FIG. 2, it illustrates a schematic diagram illustrating a cloud credit card service system according to the present invention. The cloud credit card service system 110 at least comprises a processing device 111 and storage module 113. The processing device 111 may be one or more processer for processing every computation, algorithm or operation of the cloud credit card service system 110, and the processing device 111 is electrically coupled to the storage module 113. The storage module 113 at least may store a cloud credit card transaction module (applications or firmware) 1133, an operating system (not shown) and an authorizing information 1135. In one embodiment, the cloud credit card transaction module 1133 processes the transaction process in cloud, and generates a user interface 1131 for the user executing the cloud credit card service. The cloud credit card transaction module 1133 will process the transaction of the cloud credit card (which is similar as the traditional transaction process of the existed credit cards) based on the receiving instructions. In order to avoid confusing the technical characters of the present invention, some known elements or frames, such as input-output devices, displays, transmitting devices, operating systems, do not describe in detail here.

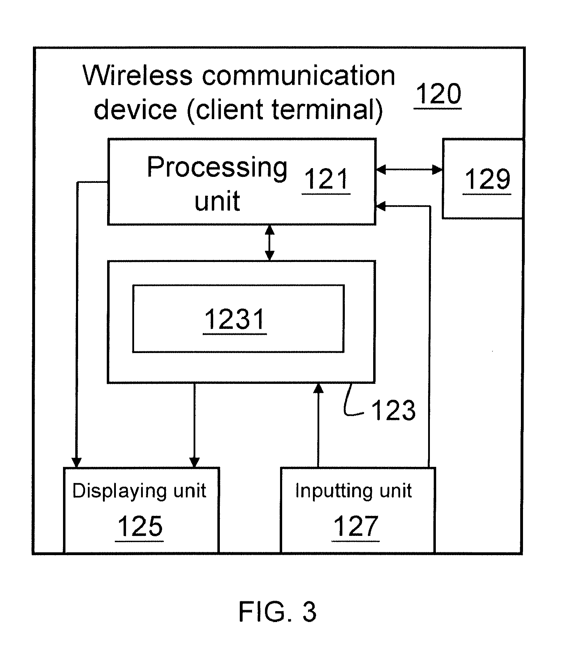

Referring to FIG. 3, it illustrates a schematic diagram illustrating the wireless communication device 120 according to the present invention. The wireless communication device 120 at least comprises a processing unit 121, a storage unit 123, a displaying unit 125 and an inputting unit 127, and they are electrically connected each other. Moreover, the wireless communication device 120 comprises a signal transmitting unit 129, which connects electrically to the processing unit 121 and is utilized to connect to other devices or service system by wireless connections for transmitting signal and information. It's anticipated that some existing elements do not describe here for avoiding confusing the technical characters of the present invention.

In this embodiment, the processing unit 121 is utilized to process computations and operations of the wireless communication device 120. When a user (or client terminal) enters instructions into the storage unit 121 by the inputting unit 127, and the processing unit 121 executes the specified operation based on the instructions of the user. The storage unit 123 is utilized to store operating systems and applications of the wireless communication device 120. A user interface 1131 is displayed on the displaying unit 125 while the programs is executing. Thus, the user could operate the wireless communication device 120 wirelessly connecting to the cloud credit card service system 110 via the user interface. In this embodiment, the inputting unit 127 may be a plurality of physical buttons or a touch panel.

In one embodiment, users may also download the application 1231 provided by the cloud credit card service system 110, and store the application 1231 in the storage unit 123. Thus, the users may store information of their existing one or more credit cards into the storage unit 123 directly. When the users go to the shop 130 for shopping, they may connect wirelessly to the cloud credit card service system 110 via the application 1231 and transact with the shop 130.

It's anticipated that, for briefly description, the frames of the cloud credit card service system 110 and the wireless communication device 120 are only illustrated the related parts according to the present invention, not the entire frames. Therefore, the scopes of the present invention should not be limited in the drawings shown in the present invention.

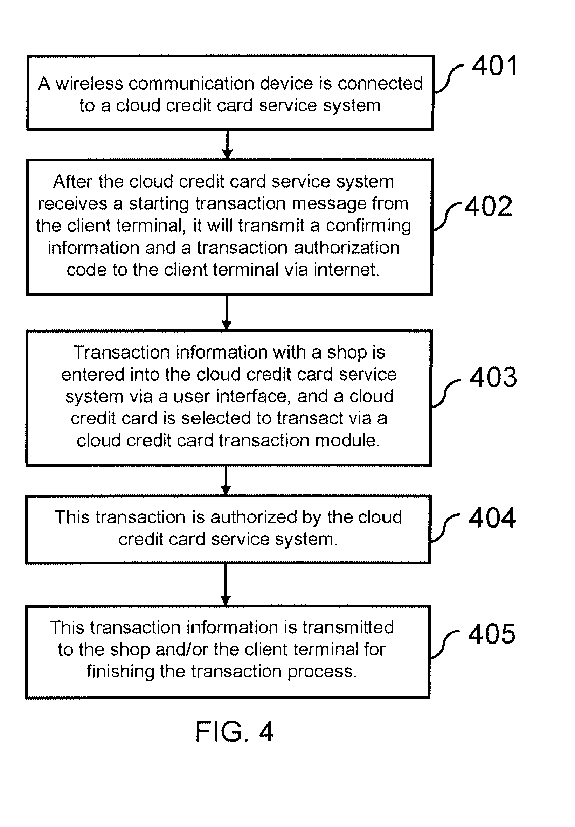

Subsequently, referring to FIG. 4, it illustrates a flow chart of an embodiment of a cloud credit card transaction system according to the present invention, and accompanying with the schematic diagrams of the cloud credit card service system and the wireless communication device shown in FIGS. 1-3 to introduce.

Initially, a wireless communication 120 is connected to a cloud credit card service system 110 (step 401), and start up a transaction process of a cloud credit card.

When a user in the client terminal 120 wants to transact via the cloud credit card service system 110, he/she may make the wireless communication device 120 connect to the cloud credit card service system 110 by wired or wireless connections. The processing unit 121 of the wireless communication device 120 operates the signal transmitting unit 129 connecting to the cloud credit card service system 110 by wireless connections. In this case, the user could operate a user interface, which may be a user interface of an application 1231 stored in the wireless communication device 120 and can be displayed on a displaying unit 125, or which may be a user interface 1131 of the cloud credit card service system 110, to understand the operating status, and the user could enter instructions by an inputting unit 127.

In some embodiments of the present invention, the displaying unit 125 may be a display screen, and the inputting unit 127 may be a plurality of physical buttons or virtual buttons based on touch technique. On the other words, in alternately embodiments of the present invention, the displaying unit 127 and the inputting unit 129 are integrated to one device while the wireless communication device 120 adopts a touch panel to being the inputting unit.

Moreover, the cloud credit card service system 110 receives the transaction initiation information from the client terminal 120, and transmits a confirming information and transaction ID to the client terminal 121 via Internet (Step 402). In the foregoing step 401 and step 402, the information data are transmitted via secure socket layer (SSL). SSL is an internet protocol security for protecting security of the transmitting data between the web service system and browsers. Based on this security protocol, the transmitting data will encrypt in different levels depending on the kinds of authorization (such as 128 bits, or 256 bits) and check the completeness of the transmitting data. Furthermore, cloud credit cards are constructed to being based on public key infrastructure (PKI) for enabling the wireless communication device 120 and the cloud credit card service system 110 to transmit via SSL. Thus, the cloud credit card transaction system of the present invention could be operated in more security conditions.

Subsequently, the client terminal 120 transmits the transaction information to the cloud credit card service system 110, for example, the client terminal 120 enters the transaction information of a shop to the cloud credit card service system 110 via the user interface 1131. The transaction information comprises the item name, number, price (total price), manufacturer's code and transaction ID of this transaction. Thus, users could transact by a cloud credit card via the cloud credit card transaction module 1133 (Step 403).

In some embodiments of the present invention, the cloud credit card transaction module 1133 of the cloud credit card transaction system 100 may be stored in the storage module 113 of the cloud credit card transaction service system 110, and started up based on the operation of the service system then transmit a user interface 1131 to the client terminal 120. In this case, the users may use the wireless communication device 120 to connect wirelessly to the cloud credit card service system 110 via internet network or telecommunication network by a browser in the wireless communication device 120, or other similar ways. Further, the wireless communication device 120 receives and displays a user interface 1131. Thus, the user may enter a user account and passwords into the cloud credit card service system 110 via the user interface 1131 for displaying the personal authorization information of cloud credit cards. Moreover, the user may enter transaction information of a shop into the cloud credit card service system 110 via the user interface 1131 and chose a cloud credit card stored in the authorizing information 1135 of the cloud credit card service system 110 to transact with the shop. After confirming the information, the transaction information will be performed by the cloud credit card transaction module 1133.

In alternately embodiments of the present invention, users may download an application 1231 from the cloud credit card service system 110 and store the application 1231 in a storage unit 123 of the wireless communication device 120. In this embodiment, when users click and start up the application 1231, they may contact with the cloud credit card service system. Some authorization information of at least one or more cloud credit cards could be stored in the storage unit 123 of the wireless communication device 120. Similarly, the user account is set for ensuring the security of the user's information. Therefore, even the user losses the wireless communication device 120 carelessly, the others could not use this wireless communication device 120 to transact with any shop. Thus, the user's credit cards in the wireless communication device 120 will be no more illegal use and solve those kinds of the traditional credit cards' problems.

In one embodiment, virtual credit cards (as the same as cloud credit cards) is generated based on public key infrastructure (PKI). For example, the issuing bank will provide users an identity certification, such as X. 509 v3, and this identity certification involves with version of the certification. Moreover, serial number is only one series of certification defined by a certificate authority (CA). Furthermore, an issuer is name of CA of X.500, which includes: Country Name, State Name, Locality Name, Organization Name, Common Name, and the combination thereof. A period of validity respects as an effective date and an expiration date of this certification. Moreover, a subject respects as a user name of X.500 and the user holds the corresponding public key. The public key data comprises a value and arithmetic of the public key. Issuer unique identifier (ID) is a selected column for identifying CA. Subject unique identifier is also a selected column for identifying the user. Extension is an extensive column for adding information of the certification and limiting the using regions (for electronic credit cards). Finally, signature is obtained from the foregoing data via the secrete keys of CA.

After the user enters the transaction information into the user interface and transmits the transaction information to the cloud credit card service system 110 by wireless connections. The up-stream transaction information in the cloud credit card service system 110 will be executed by the cloud credit card transaction module 1133.

Therefore, the cloud credit card transaction module 1133 will initiate the processes, such as signature and authorization, of the transaction (Step 404). Thus, the transaction information, which comprises user ID, time of transaction, item name, number of item, price (total price) and transaction ID, will transmit to the shop and/or the user for finishing this transaction (Step 405).

Therefore, users could transact with shops by the cloud credit card transaction module according to the cloud credit card transaction system and the transaction method of the present invention, without bringing with any physical credit cards. The following embodiments will show the transmitting way and pay/payout way between the issuing band and the acquiring bank, which comprises the transaction results will be reported by the cloud credit card transaction service system.

Referring to FIG. 5, it illustrates a flow chart of an embodiment of a cloud credit card transaction system combining with scanning-position service according to the present invention, similarly, it is accompanying with the schematic diagrams of system shown in FIGS. 1-3.

In this embodiment, the wireless communication device 120 is capable to scan the position of the wireless communication device 120 via a signal transmitting unit 129 (Step 501). In this case, the wireless communication device 120 may use the signal transmitting unit 129 to connect to a position system via wireless connections, and the position system may be, for example, GPS, 3G, Wi-Fi or RFID, but it isn't limited in these. It's anticipated that some existing elements about position system do not describe here for avoiding confusing the technical characters of the present invention.

Therefore, the cloud credit card service system 110 receives the position of the wireless communication device 120, and transmits the information of shops 130 to the wireless communication device 120 (Step 502). In certain embodiments of the present invention, the wireless communication device 120 may connect to the cloud credit card service system 110 by wireless connections. Further, the user will load in the user interface 1131 by the wireless communication device 120, and the wireless communication device 120 may transmit its position to the cloud credit card service system 110. Thus, the cloud credit card service system 110 will list shops 130 which accepts the transaction service via cloud credit cards around the client terminal 120 based on the position of the wireless communication device 120.

In another embodiment of the present invention, the shops 130 also may show messages, such as their IDs, advertisements, sales promotions, via the cloud credit card service system 110. Thus, users may load in the user interface 1131 of the cloud credit card service system 110 and obtain those messages from the shops 130.

Therefore, users may go to those shops 130 to shop depending on the information of the shop 130 (Step 503).

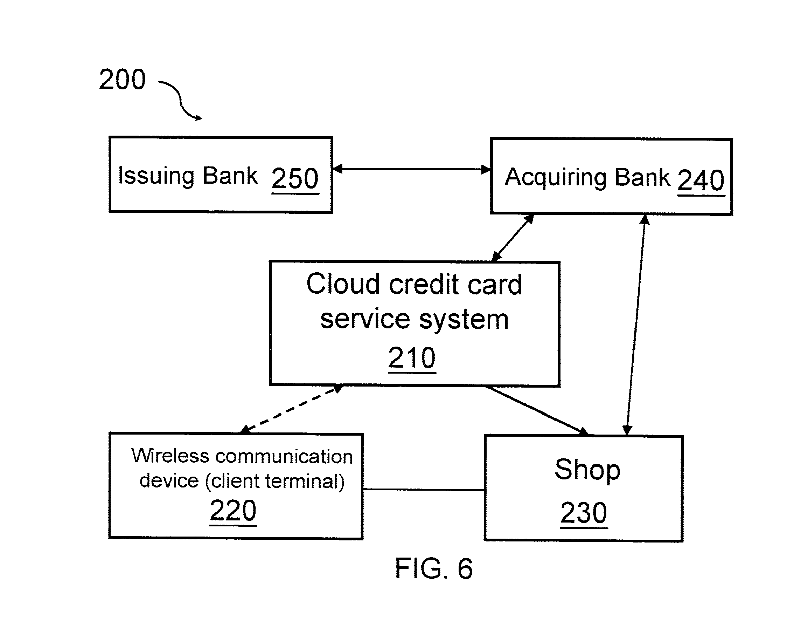

Referring to FIG. 6, it illustrates a schematic diagram illustrating another embodiment of a cloud credit card transaction system according to the present invention. In this embodiment, some features of the cloud credit card transaction system 200, which are similar as the cloud credit card transaction system 100, do not describe again.

In this embodiment, the cloud credit card service system 210 of the cloud credit card transaction system 200 may be an independent organization for providing transaction services of cloud credit cards. The cloud credit card service system 210 makes contract with a shop 230 and an acquiring bank 240, and a client terminal 220 could transact with the shop 230 and the acquiring bank 240 via cloud credit cards.

In other words, the client terminal 220 may set the personal cloud credit cards' information in the cloud credit card service system 210, and store information of at least one credit card in the cloud credit card service system 210. Thus, when the client terminal 220 goes to the shop 230 for shopping, the client terminal 220 may use the wireless communication device 220 to connect to the cloud credit card service system 210 by wireless connections. After loading in the user account, the client terminal 220 may select the information of cloud credit cards and transact with the shops 230 via a cloud credit card transaction module 1133. In another embodiment, the information of cloud credit cards also may store in the wireless communication device 220 of the terminal client. In those cases, the usage of the cloud credit cards is similar as the usage of physical credit cards.

The client terminal 220 may store information of a plurality of credit cards in the cloud credit card service system 210. In practice, users could select one credit card from the cloud credit card service system 210 to transact.

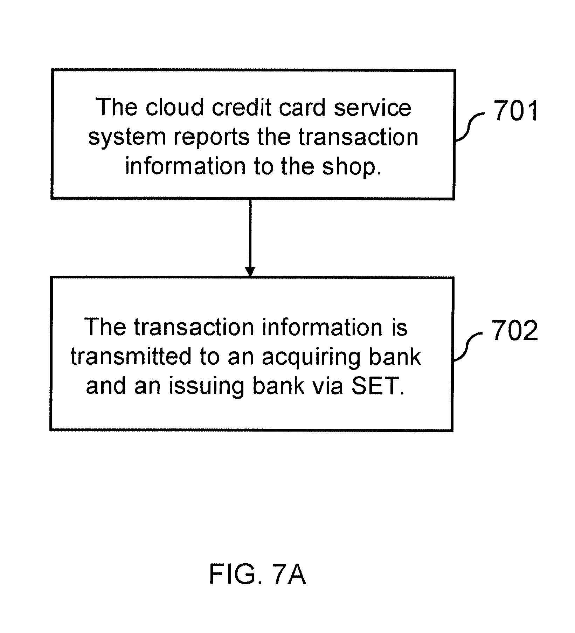

Subsequently, referring to FIG. 7a, it illustrates flow charts of another embodiment of a cloud credit card transaction system according to the present invention, and is accompanying with FIG. 5 to introduce. It's anticipated that the same or similar processes as the foregoing description would not repeat again. In following description, only the difference parts are described in detail.

When the client terminal 220 transacts with the shop 230 via the cloud credit card service system 210, and the cloud credit card service system 210 will report to the shop 230 about this transaction (Step 701).

In this case, the shop 230 may check the information of the transaction. If the shop 230 confirms the information of the transaction, the information of the transaction will transmit to an acquiring bank 240 and an issuing bank 250 via secure electronic transaction (SET) (Step 702).

In this embodiment, after the shop 230 confirms the transaction, the information of the transaction will transmit to the acquiring bank 240 for charging. At the same time, the cloud credit card service system 210 also will transmit the information of the transaction to the acquiring bank 240. The acquiring bank 240 may compare with two information of the transaction for confirming. Moreover, the cloud credit card service system 210 will perform signature and authorization process, and the client terminal 220 should be confessing the transaction. Therefore, the acquiring bank 240 confirms the transaction matching the transaction process of the credit cards, and makes sure the transaction effectively. Thus, the acquiring bank 240 will requires charging to the issuing bank 250 for finishing the transaction processes of the cloud credit cards. Afterward they share the outlays depending on the contract.

In this case, the information of the transaction is transmitted via SET. The SET is defined by VISA International Service Association and Master Card International for requiring the electronic payment system based on credit cards in internet network and making sure the transaction security of credit cards in open internet. Therefore, the security of transmitting data of the transaction could be confirmed.

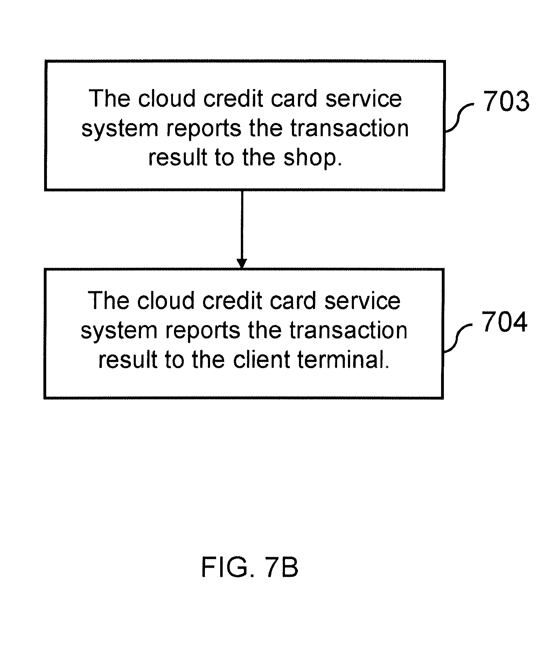

In some embodiments of the present invention, the cloud credit card transaction method further comprises the following steps. Referring to FIG. 7B, the cloud credit card service system 210 reports the shop about the results of the transaction (Step 703). When the cloud credit card service system 210 transmits the information of the transaction to the acquiring bank 240 and the acquiring bank 240 confirms the transaction, this transaction result will transmit back to the cloud credit card service system 210 for recording this transaction. Subsequently, the cloud credit card service system 210 will also transmit and report this transaction result to the shop 230 and the client terminal 220 (Step 704).

In one embodiment of the present invention, the cloud credit card service system 210 reports the transaction result to the client terminal 220 and the shop 230 via short message service (SMS). In another embodiment of the present invention, the cloud credit card service system 210 reports the transaction result to the client terminal 220 and the shop 230 via electronic mail (E-mail).

In embodiments of the present invention, the acquiring bank 240 and the issuing bank 250 may be the different banks, or the same bank, but they should not be limited.

Furthermore, in certain embodiments of the present invention, the cloud credit cards may be the physical credit cards belonging to users, and the users enter the related information of the physical credit cards into the user interface 1131 of the cloud credit card service system 110 or into the application 1231 of the wireless communication device 120. In another certain embodiments of the present invention, the cloud credit cards may be virtual credit cards (or called as cloud credit cards) issuing from the issuing bank 250 and may be constructed by procedures based on the public key infrastructure (PKI) and matched those foregoing related mechanisms.

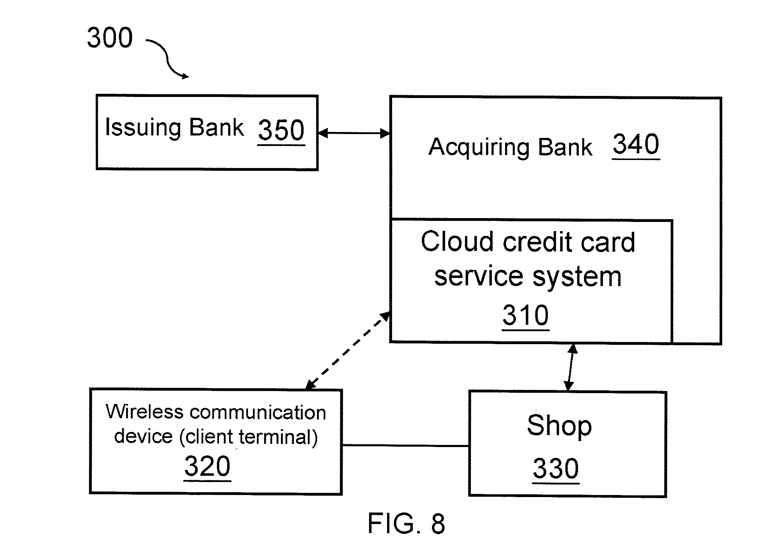

Finally, referring to FIG. 8, it illustrates a schematic diagram illustrating still another embodiment of a cloud credit card transaction system according to the present invention. In this embodiment, some features of the cloud credit card transaction system 300, which are similar as the cloud credit card transaction system 100 and the cloud credit card transaction system 200, do not describe again.

In this embodiment, the cloud credit card service system 310 is involved in an acquiring bank 340. In this case, cloud credit cards may be issued by an issuing bank 350 for providing to a client terminal 320, or alternately, the cloud credit cards may be constructed by users entering information of their credit cards into the cloud credit card service system 31 0. The acquiring bank 340, the issuing bank 350 and a shop 330 make contracts each other, and the shop 330 accepts the client terminal 320 to transact via the cloud credit card transaction module 1133.

Thus, when a user with client terminal 320 goes to the shop 330 for shopping, the wireless communication device 320 will connect to the cloud credit card service 310 via wireless connection for transacting. Subsequently, the cloud credit card service system 310 finishes the transaction and reports the transaction result to the shop 330 and the client terminal 320. After the shop 330 confirms the transaction, the shop 330 will require payout from the acquiring bank 340 and the acquiring bank 340 requires payout from the issuing bank 350.

Finally, the issuing bank 350 will record this transaction into a list, and send the list to the client terminal 320 every month and require money for finishing the transaction process.

In some embodiments of the present invention, the cloud credit card service system 110, 210, 310 further has a white list for recording transaction habits and shops 130, 230 , 330 of every client terminal 120, 220, 320. Therefore, if a user with client terminal 120, 220, 320 goes to a shop 130, 230, 310 which is not listed in the white list for transacting, the cloud credit card service system 110, 210, 310 will provide further certificate process to the client terminal 120, 220, 320, such as means of entering password or fingerprint, for confirming the client terminal 120, 220, 320. Unless the client terminal 120, 220, 320 passes this certificate process, the cloud credit card service system 110, 210, 310 will not execute the transaction of the cloud credit card.

In this case, the white list also may be added or canceled by the client terminal 120, 220, 320 after loading in the cloud credit card service system 110, 210, 310. Thus, the transaction security of the client terminal 120, 220, 320 via the cloud credit card transaction system and transaction method thereof according to the present invention may be promoted.

The advance of the present invention comprises: convenience, security, and manageability. "Convenience," the users can make their physical credit cards into their mobile device via the cloud service without bring with those physical credit cards all the time. "Security," electrical credit cards issued from banks for transacting via credit card machine (cloud credit card transaction module), and the certificate authority of those electrical credit cards may be confirmed by the issuing bank. "Manageability," cloud credit card transaction system may manage a plurality of credit cards easily, and the users further may set their transaction strategy by themselves, such as transaction locations, shops, or the amount of money.

As mentioned-above, users may go to shop and use the cloud credit card transaction system and the transaction method thereof according to the present invention for transaction without bring with any physical credit cards. Otherwise, the transaction process of the cloud credit cards may connect to the cloud credit card service system by wireless connection and be executed by the cloud credit card service system without via the shop. Thus, the important information of the credit cards will not be shown to other people and the transaction security will be promoted. Furthermore, physical credit cards do not exist, and thus, lose problems and illegal use problems won't be occurred.

It will be understood that the above descriptions of embodiments are given by way of example only and that various modifications may be made by those with ordinary skill in the art. The above specification, examples and data provide a complete description of the structure and use of exemplary embodiments of the invention. Although various embodiments of the invention have been described above with a certain degree of particularity, or with reference to one or more individual embodiments, those with ordinary skill in the art could make numerous alterations to the disclosed embodiments without departing from the spirit or scope of this invention.

## Claims

1. A cloud credit card transaction system (100), comprising:
a client terminal (120), including a wireless communication device (120);
a cloud credit card service system (110), wirelessly connected to the wireless communication device (120), wherein said cloud credit card service system (110) includes a cloud credit card transaction module (1133) for providing cloud credit card transaction; and
at least one shop (130), connected to said cloud credit card service system (110), wherein said client terminal (120) is coupled to the cloud credit card transaction module (1133) to transact with said shop (130) by the wireless communication device (120).

2. The cloud credit card transaction system (100) of the claim 1, wherein the cloud credit card is contributed to be based on Public Key Infrastructure.

3. The cloud credit card transaction system (100) of the claim 1, wherein the wireless communication device (120) communicates with said cloud credit card service system (110) via Secure Socket Layer (SSL).

4. The cloud credit card transaction system (200, 300) of the claim 1, further comprising:
an acquiring bank (240, 340), connected to said shop (230, 330) and said cloud credit card service system (210, 310) for confirming the transaction; and
an issuing bank (250, 350), connected to said acquiring bank (240, 340) and said cloud credit card service system (210, 310), and said issuing bank (250, 350) will pay to said acquiring bank (240, 340) or to said cloud credit card service system (210, 310) for finishing transaction after said issuing bank confirms the transaction.

5. The cloud credit card transaction system (200, 300) of the claim 4, wherein said shop (230, 330), said issuing bank (250, 350) and said acquiring bank (240, 340) are communicated with each other via Secure Electronic Transaction (SET).

6. The cloud credit card transaction system (100) of the claim 1, wherein the wireless communication device (120) comprises: a storage unit (123), for storing information of the cloud credit card.

7. The cloud credit card transaction system (100) of the claim 1, wherein said cloud credit card service system (110) comprises: a storage module (113), for storing information of the cloud credit card for said client terminal (120) to transact via the cloud credit card.

8. A cloud credit card transaction method, the steps of the method comprising:
connecting a wireless communication device (120) to a cloud credit card service system (110), wherein said could credit card service system (110) comprises a cloud credit transaction module (1133) for generating an user interface (1131) displayed on said wireless communication device (120);
transmitting a transaction-authority code (1135) to said wireless communication device (120) by said cloud credit card service system (110) for authorizing a transaction after said wireless communication device (120) starting to the transaction;
entering transaction information with a shop (130) including said transaction-authority code (1135) into said cloud credit card service system (110) by said wireless communication device (120), and the transaction executed by said cloud credit card service system (110) and a cloud credit card; and
authorizing the transaction via said cloud credit card transaction module (1133).

9. The cloud credit card transaction method of claim 8, further comprising the steps of:
said wireless communication device (120) comprising a signal transmitting unit (129) and scanning a position of said communication wireless device by said signal transmitting unit (129); and
after said cloud credit card service system (110) receiving the position of said wireless communication device (120), transmitting information of at least one shop (130) to said wireless communication device (120) by said cloud credit card service system (110).

10. The cloud credit card transaction method of claim 8, further comprising the steps of:
reporting information of the transaction to said shop (230, 330) by said cloud credit card service system (210, 310); and
transmitting the transaction to an acquiring bank (240, 340) and an issuing bank (250, 350) via Secure Electronic Transaction (SET).

11. The cloud credit card transaction method of claim 10, wherein said issuing bank (250, 350) pays to said cloud credit card service system (210, 310) after confirming the transaction, and said issuing bank (250, 350) pays to said shop (230, 330) after said cloud credit card service system (210, 310) pays to said issuing bank (250, 350).

12. The cloud credit card transaction method of claim 10, wherein said cloud credit card service system (310) is involved in said acquiring bank (340), and said issuing bank (350) confirms the transaction and pays to said acquiring bank (340) for paying to said shop (330).

13. The cloud credit card transaction method of claim 8, further comprising the steps of:
reporting transaction results to said shop (130) by said cloud credit card service system (110); and
reporting the transaction results to a user of said cloud credit card in said wireless communication device (120) by said cloud credit card service system (110).
